# EUROPÄISCHE PATENTSCHRIFT

(11) **EP 0 555 732 B1**
(45) Veröffentlichungstag und Bekanntmachung des Hinweises auf die Patenterteilung: **05.07.1995**
(21) Anmeldenummer: 93101577.0
(22) Anmeldetag: 02.02.1993
(51) Int. Cl.: B29C 44/00

(54) **Anlage zum kontinuierlichen Herstellen von Polyurethan-Blockschaumstoff**
Device for continuous production of polyurethane foam blocks
Dispositif pour la production en continu de blocs en mousse de polyuréthane

(30) Priorität: 14.02.1992 DE 4204333
(43) Veröffentlichungstag der Anmeldung: 18.08.1993
(73) Patentinhaber: MASCHINENFABRIK HENNECKE GmbH, D-51379 Leverkusen (DE)
(72) Erfinder: Klahre, Horst, W-5205 Sankt Augustin (DE)
(74) Vertreter: Drope, Rüdiger, Dr.

(56) Entgegenhaltungen:
- EP-A- 0 021 159
- EP-A- 0 021 564
- WO-A-79/00186
- DE-A- 3 241 520
- GB-A- 2 004 229
- US-A- 4 060 579

## Beschreibung

Die Erfindung betrifft eine Anlage zum kontinuierlichen Herstellen von Polyurethan-Blockschaumstoff, speziell aus einem schnell reagierenden, frei aufschäumenden Reaktionsgemisch, insbesondere mit einer Steigzeit unter 1,5 Minuten, bestehend aus einem endlosen Transportband, welches zusammen mit verstellbaren Seitenbegrenzungen einen in der Breite einstellbaren Schäumtrog bildet, wobei dem Transportband ein Aufgabetisch mit einem darüber angeordneten, feststehenden Mischkopf vorgeordnet ist, wobei dieser Aufgabetisch eine der Gemischaufgabestelle nachgeordnete Verteilvorrichtung aufweist, welche aus einer verformbaren Platte mit darunter angeordneter, in der Höhe verstellbarer Stützvorrichtung besteht, wobei eine oder mehrere Abwickelstationen lediglich für Boden- und Seitenwand-Abdeckbahnen vorgesehen sind. Eine derartige Anlage ist zum Beispiel aus der EP-A-0 021 159 bekannt.

Die kontinuierliche Blockschaumstoff-Herstellung hat heute ein Niveau erreicht, welches den meisten Anforderungen hinsichtlich Qualität und Vermeidung von Abfall durch Rechteckblock-Querschnitt gerecht wird. Nur einige wenige spezielle Rezepturen bedingen besondere Maßnahmen, welche noch verbesserungsbedürftig sind.

Probleme treten immer noch bei der Verarbeitung schnell reagierender Reaktionsgemische auf, beispielsweise Weichschaumstoffmischungen auf Polyesterbasis, weil hier die Steigzeit nur etwa 1 Minute beträgt. Die Steigzeit ist definiert als die Zeitspanne vom Beginn der Vereinigung der Reaktionskomponenten bis zum Ende des Aufschäumens (Kunststoff-Handbuch, Bd. 7, "Polyurethane", 2. Aufl. 1982, S. 95, Carl Hanser Verlag München-Wien).

Vergleichsweise liegt die Steigzeit bei Polyetherschäumen bei 2 bis 3 Minuten, wodurch eine Reihe von Problemen gar nicht erst auftritt.

Eine geringe Steigzeit erfordert ein sehr enges Altersspektrum des aufgetragenen Reaktionsgemisches über die Schäumbreite sowie eine gleichmäßige Auftragshöhe, um einen rechteckigen Blockquerschnitt zu erzielen. Diese Forderungen werden durch die heute üblichen Schäumbreiten von bis zu 2,50 m besonders erschwert.

So läßt sich beispielsweise ein gleichmäßiger Gemischauftrag mittels eines über die Schäumbreite oszillierenden Mischkopfes erzielen, wobei jedoch das Altersspektrum des Reaktionsgemisches sehr ungünstig ist. Aus EP-0 021 159 B1 ist es bekannt, das aufgetragene Reaktionsgemisch mittels eines Spaltes zu kalibrieren. Dieser Spalt ist vom Transportband und einer darüber angeordneten Walze oder einem Balken begrenzt, wobei eine der beiden den Spalt bildenden Flächen von hinten mittels Stellschrauben verformbar ist, so daß die Höhe des Spaltes über die Schäumbreite unterschiedlich einstellbar ist. Um die Walze bzw. den Balken nicht mit Reaktionsgemisch zu verschmutzen, muß nicht nur eine untere, sondern auch eine obere Abdeckbahn verwendet werden, Abgesehen davon, daß sich vor der Walze oder dem Balken Reaktionsgemisch anstaut, wodurch ein unerwünscht breites Altersspektrum verursacht wird, können bei hoher Reaktionsgeschwindigkeit infolge der oberen Abdeckbahn die entstehenden Gase nicht rechtzeitig entweichen, und es bilden sich Oberflächenstörungen.

Gemäß US-PS 3 123 856 möchte man bei der Herstellung von Hartschaumstoffblöcken dadurch Rechteckblockquerschnitt erzielen, daß man unmittelbar neben den Seitenbegrenzungen Vertiefungen in die Bodenbahn einformt, welche in Laufrichtung des Transportbandes eliminiert werden. Die Forderung nach einem möglichst gleich alten Reaktionsgemisch über die Schäumbreite wird auch hier nicht erfüllt.

Aus PCT WO 79/00186 A1 ist eine in der Breite verstellbare Blockschäumanlage bekannt, welche einen fixen Mittelteil aufweist, dessen Seitenwände innen verschiebbare, unter das Mittelteil fassende Bodenplatten aufweisen, so daß die Bodenbahn über die gesamte Schäumbreite aufliegt. Verwendet wird ein oszillierender Mischkopf, wodurch ein ungünstiges Altersspektrum erzeugt wird. Eine Gemisch verteilende Funktion besitzen diese Bodenplatten nicht.

Schließlich ist es bekannt (DE 3 026 458 A1), bei einer Blockschäumanlage unterhalb des Auslaufes einer besonders gestalteten Mischvorrichtung eine elastische Ablenkplatte anzuordnen. Diese ruht auf einer Abstützung mit besonderen Konturen, um die Mischverteilung zu beeinflussen. Eine optimale Gemischverteilung ist jedoch nicht möglich, weil diese Ablenkplatte über dem Aufgabetisch, und zwar auch über der Bodenabdeckbann, angeordnet ist. Da die Ablenkplatte nur im mittleren Bereich befestigt ist, läßt sie sich nur grob verformen. Zudem besteht ein starkes Gefälle, was zu Überwälzungen führen kann. Obwohl die Abdeckplatte mit einer Antihaftschicht versehen ist, läßt sich bei Produktionsunterbrechungen das physiologisch bedenkliche Spülen mit Lösungsmitteln nicht vermeiden, um die elastische Platte sauber zu halten.

Es besteht die Aufgabe, die kontinuierliche Herstellung von Polyurethan-Blockschaumstoff, speziell aus einem schnell reagierenden Reaktionsgemisch, d.h. speziell mit einer Steigzeit unter 1,5 Minuten, derart zu verbessern, daß das Altersspektrum des Reaktionsgemisches über die Auftragsbreite bei gleichmäßiger Auftragshöhe möglichst gering ist, um eine homogene Schaumstoffqualität bei wenigstens angenähert rechteckigem Querschnitt zu erzielen.

Gelöst wird diese Aufgabe dadurch, daß die verformbare Platte aus einer in den Aufgabetisch eingelassenen, gummielastischen Platte besteht und sich über mindestens 80 % der maximal vorgesehenen Auftragsbreite erstreckt und in unverformtem Zustand mit dem Aufgabetisch eine ebene Fläche bildet; daß der umlaufende Rand dieser Platte im Aufgabetisch fixiert ist; daß die Stützvorrichtung einen mittig angeordneten Stempel aufweist, welchem quer zur Produktionsrichtung mindestens zwei symmetrisch dazu seitlich angeordnete, verstellbare Stempel zugeordnet sind.

Dadurch wird erreicht, daß die gummielastische Platte durch die Stützvorrichtung gezielt verformt werden kann und daß sich die Verformung auch der gewünschten Schäumbreite anpassen läßt. Durch die unterschiedliche Einstellbarkeit der einzelnen Stempel läßt sich das an der Aufgabestelle aus dem mittig angeordneten Mischkopf austretende Gemisch strömungsmäßig so verteilen, daß in Produktionsrichtung hinter der Verteilvorrichtung in einem Querschnitt über die gesamte Schäumbreite ein Gemisch mit außerordentlich engem Altersspektrum bei gleichmäßiger Auftragsdicke vorhanden ist. Daraus ergibt sich dann eine hervorragende Schaumstoffqualität und ein rechteckiger Blockquerschnitt. Besonders vorteilhaft ist es, daß diese Verteilvorrichtung von der Bodenabdeckbann abgedeckt ist und mit dem Reaktionsgemisch nicht in Berührung kommt. Es ist notwendig, daß die gummielastische Platte mindestens 80 % der maximal vorgesehenen Auftragsbreite abdeckt, damit bei ihrer Verformung genügend Gefälle auftritt, um das Reaktionsgemisch auch über die unverformten Randstreifen zu verteilen. In Produktionsrichtung gesehen ist keine besonders große Ausdehnung erforderlich. Sie sollte jedoch so abgestimmt sein, daß bei maximaler Höheneinstellung der Stempel die Bodenbahn beim Darüberhinwegwandern nicht zu steil ansteigt und nicht zu steil wieder abfällt. Insbesondere das Gefälle ist für die Fließgeschwindigkeit bei der Gemischverteilung von erheblichem Einfluß. Die Fließgeschwindigkeit soll einerseits bewirken, daß das Reaktionsgemisch möglichst überall gleichzeitig seinen endgültigen Platz erreicht, daß aber bei diesem Fließen andererseits Überwälzungen vermieden werden müssen. Wie weit man das Maximum der Höhenverformung hinter der Gemischaufgabestelle anordnet, hängt von der Schäumbreite und von der Viskosität des Reaktionsgemisches beim Austritt aus dem Mischkopf ab. Je nachdem, ob die Stempel mehr zur vorderen oder zur hinteren Befestigung der gummielastischen Platte hin angreifen, ist der Anstieg oder der Abfall steiler. Die Ausdehnung der gummielastischen Platte in Produktionsrichtung sollte etwa 0,50 bis 1,50 m betragen. Die gummielastische Platte sollte eine gewisse Eigensteifigkeit besitzen oder so eingespannt sein, daß sie, ohne auf der Stützvorrichtung aufzuliegen, nicht durchhängt. Die Eigensteifigkeit soll aber andererseits eine ausreichende Verformung zulassen. Da die Stempel der Stützvorrichtung in Arbeitsposition voneinander Abstand aufweisen, soll dank der Eigensteifigkeit der Platte zwischen den einzelnen Abstützstellen ein sanfter Übergang der Platte vorhanden sein. Es versteht sich, daß neben der Elastizität des Werkstoffes der Platte auch deren Dicke für die Verformbarkeit von Einfluß ist. Ein weiterer Parameter für die Verformbarkeit bzw. für die Art der Verformbarkeit ist die Art der Fixierung der Ränder der Platte. Bei einer Fixierung an nur wenigen Punkten ist die Verformbarkeit anders als wenn die Fixierungspunkte dicht aneinander liegen oder wenn eine rundum laufende Einklemmung stattfindet. Durch die Lage der Fixierungspunkte läßt sich die Verformbarkeit auch in der Richtung verschieden einstellen, so daß im Zusammenwirken mit der jeweiligen Position der unterstützenden Stempel bevorzugte Fließrichtungen einstellbar sind.

Vorzugsweise sind die seitlichen Stempel quer zur Produktionsrichtung ausfahrbar gelagert.

Dadurch wird erreicht, daß bei der Produktion unterschiedlich breiter Blöcke mittels der Stempel die Gemischverteilung der jeweils einzustellenden Breite anpaßbar ist. Ist mehr als ein seitliches Stempelpaar vorgesehen, so können die weiteren Stempelpaare entweder ebenfalls im mittleren Stempel verstellbar gelagert sein oder in einem der innen liegenden Stempelpaare.

Gemäß einer weiteren besonderen Ausführungsform sind die seitlichen Stempel in Produktionsrichtung schwenkbar gelagert.

Das heißt, zusätzlich zur Höhenverstellbarkeit und gegebenenfalls auch zur seitlichen Ausfahrbarkeit sind die Stempel derart um Achsen schwenkbar, daß sie weiter in Produktionsrichtung oder entgegengesetzt dazu verstellbar sind. Diese Maßnahme gestattet eine besonders gute Anpassung der Fließrichtungen an die Anforderungen des jeweiligen Reaktionsgemisches bzw. der Schäumbreite.

Gemäß einer weiteren besonderen Ausführungsform sind die seitlichen Stempel senkrecht zur Produktionsrichtung schwenkbar gelagert.

Diese Ausführungsform ist lediglich eine andere Möglichkeit der Höhenverstellbarkeit.

Es ist zweckmäßig, die seitlichen Stempel unabhängig vom mittleren Stempel höhenverstellbar zu lagern, weil man dadurch ein größeres Einstellungsspektrum gewinnt.

Für weniger anspruchsvolle Anlagen sind alle Stempel gemeinsam höhenverstellbar gelagert, wodurch der Aufbau vereinfacht wird, aber auch die Einstellungsmöglichkeiten geringer sind.

Die Stempel bestehen normalerweise aus kolbenartig geformten Elementen, wobei deren geometrische Form der Stützfläche natürlich auf die Art der Verformung der elastischen Platte ebenfalls von Einfluß ist.

Gemäß einer weiteren besonderen Ausführungsform weisen die Stempel aufblähbare Kammern auf. Solche sind an sich bekannt. Hier läßt sich die Höhenverstellbarkeit allein oder zusätzlich durch den Grad des Aufblähens erzielen.

Die gummielastische Platte weist vorzugsweise in ihrer Ausdehnung eine symmetrische Kontur auf.

Auf diese Weise wird erreicht, daß von der in der Mitte der Schäumbreite angeordneten Gemischaufgabestelle von der gummielastischen Platte her die Voraussetzungen für eine spiegelbildliche, gleichmäßige Verteilung nach beiden Seiten zu gegeben ist.

Die geometrische Form der Platte in der Draufsicht ist in einfachster Weise rechteckig, gegebenenfalls mit abgerundeten Ecken. Durch elliptische Form oder auch Hyperbel- und/oder Parabelform lassen sich besondere Verteilungseffekte erzielen, weil dann dank dieser speziellen Formen bei der einwirkenden Abstützung durch die Stempel besondere Fließrichtungen erzielbar sind. Besonders geeignet ist ein schmetterlingsartig gestalteter Grundriß.

Gemäß einer weiteren besonderen Ausführungsform weist die gummielastische Platte stellenweise unterschiedliche Dehnung auf.

Diese unterschiedliche Dehnung läßt sich erreichen, indem man beim Herstellen der Platte an gewissen Stellen beispielsweise steife Einlagen eingießt oder man gestaltet die Platte an gewissen Stellen unterschiedlich dick oder man formt auf der Unterseite Rippen an. Dazu sind als Parameter die Fließfähigkeit des Reaktionsgemisches und die Schäumbreite besonders zu beachten. Im groben läßt sich bei Kenntnis dieser Parameter vorausberechnen, wie die Ausgestaltung erfolgen muß. Für eine Optimierung scheint aber eine empirische Ermittlung durch Versuche zweckmäßig.

In der Zeichnung ist die neue Anlage in mehreren Ausführungsbeispielen rein schematisch dargestellt und nachstehend näher erläutert. Es zeigen:
- Fig. 1: eine Blockschäumanlage in der Seitenansicht,
- Fig. 2: eine Draufsicht auf den Abriß eines Aufgabetisches gemäß einer ersten Ausführungsform,
- Fig. 3: einen Schnitt gemäß Linie A-B in Fig. 2,
- Fig. 4: Schnitte I-I bis VII-VII gemäß Fig. 2,
- Fig. 5: eine Draufsicht auf den Abriß eines Aufgabetisches gemäß einer zweiten Ausführungsform,
- Fig. 6: einen Schnitt gemäß Linie C-D in Fig. 5,
- Fig. 7 bis 12: Draufsichten auf verschieden gestaltete gummielastische Platten und
- Fig. 13: einen Querschnitt durch eine gummielastische Platte.

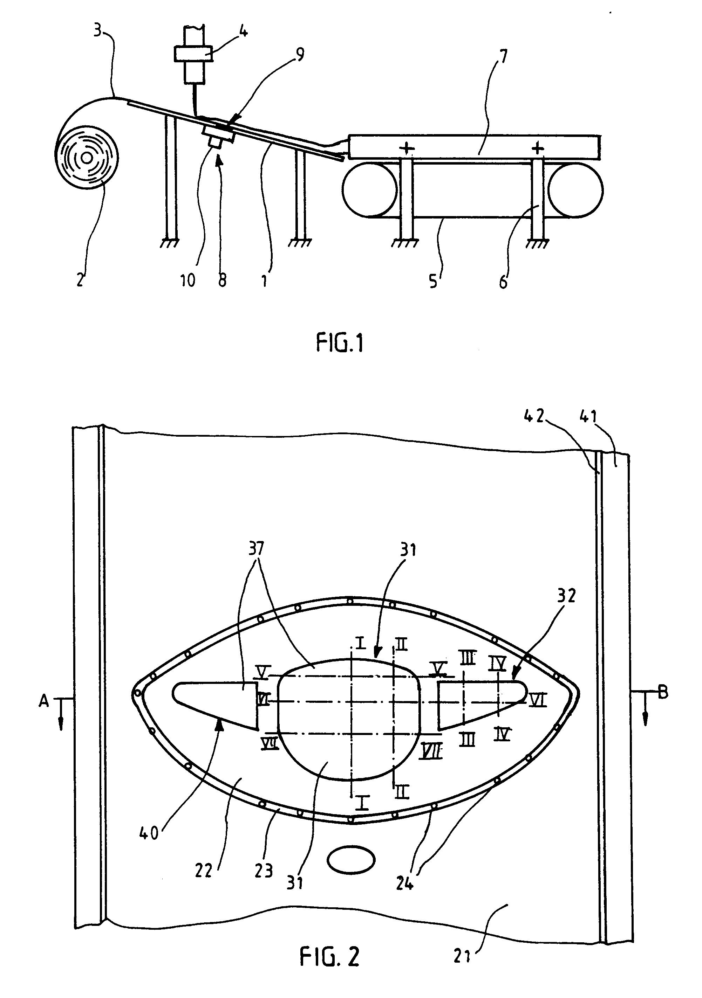

In Fig. 1 besteht die Blockschäumanlage aus einem Aufgabetisch 1, dem eine Abwickelstation 2 für eine Boden- und Seitenwandabdeckbahn 3 und ein über dem Aufgabetisch 1 mittig angeordneter feststehender, aber in Produktionsrichtung verstellbarer Mischer 4 zugeordnet sind, sowie aus einem dem Aufgabetisch 1 nachgeordneten endlosen Transportband 5 mit im Rahmen 6 in der Breite verstellbar gelagerten Seitenbegrenzungen 7. Dem Aufgabetisch 1 ist eine Verteilvorrichtung 8 zugeordnet. Sie besteht aus einer in den Aufgabetisch 1 eingelassenen gummielastischen Platte 9 mit darunter angeordneter Stützvorrichtung 10.

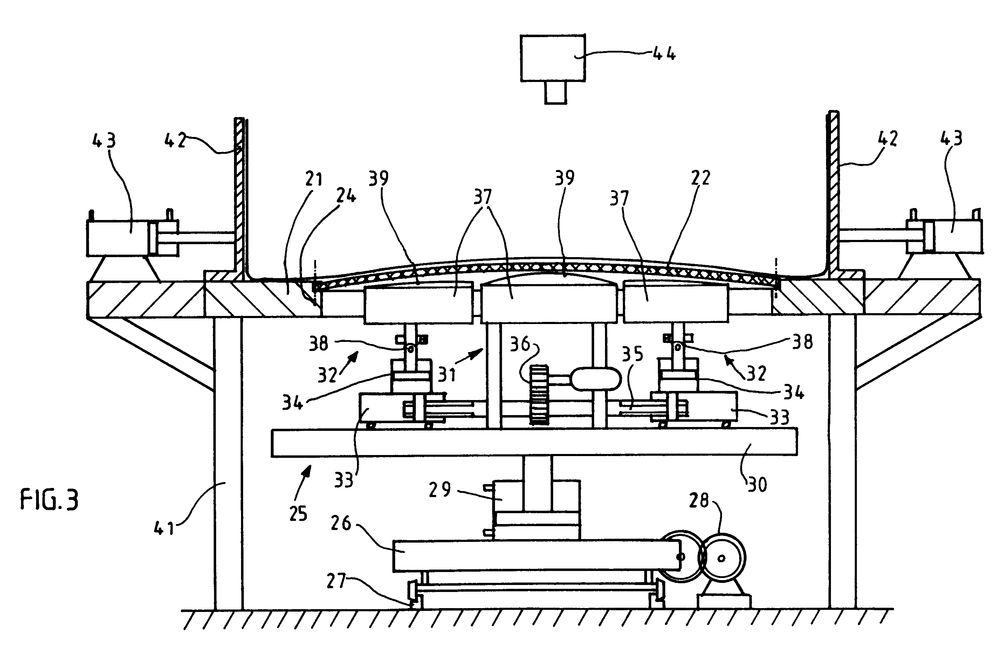

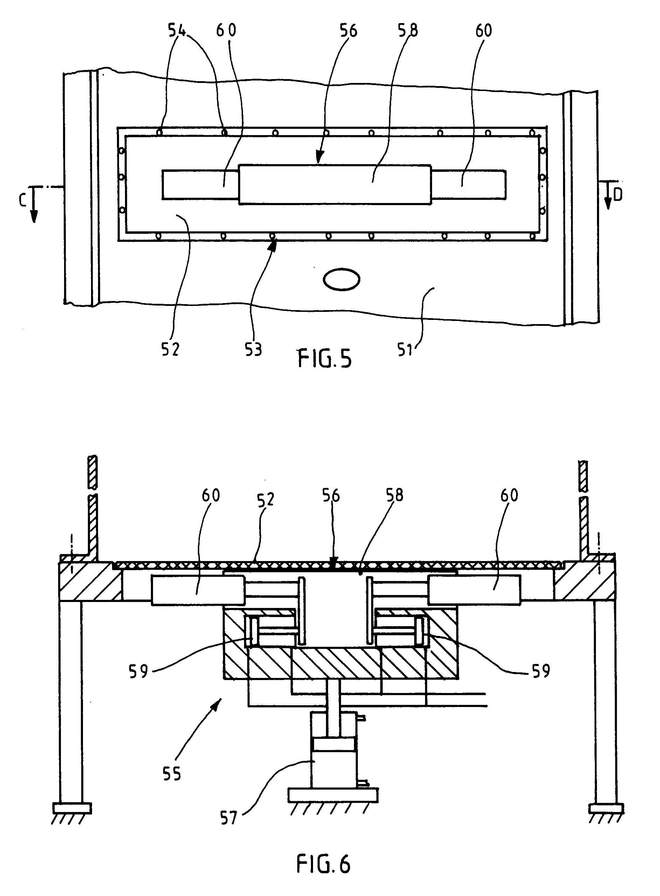

In den Fig. 2 bis 4 ist in den Aufgabetisch 21 eine gummielastische Platte 22 eingelassen, welche auf einer abgesetzten Kante 23 mittels Schrauben 24 befestigt ist, wobei die Schrauben 24 vorgewählte, unterschiedliche Abstände voneinander aufweisen, um bevorzugte Dehnungsrichtungen zu erzielen. Diese Platte 22 erstreckt sich über 85 % der maximalen Schäumbreite und ist zur Längsachse des Aufgabetisches 21 spiegelsymmetrisch ausgebildet Unterhalb der gummielastischen Platte 22 ist eine Stützvorrichtung 25 angeordnet, welche in Produktionsrichtung verfahrbar gelagert ist Hierzu ist ein Wagen 26 vorgesehen, der auf Schienen 27 fährt und mittels eines Antriebs 28 verstellbar ist. Selbstverständlich ist der Wagen 26 mit nicht dargestellten Fixierelementen in seiner gewünschten Position fixierbar. Auf dem Wagen 26 ist eine Kolbenzylindereinheit 29 angeordnet, welche eine höhenverstellbare Tragplatte 30 abstützt. Auf dieser Tragplatte 30 ist ein mittiger Stempel 31 gelagert, welchem seitlich spiegelbildlich zwei weitere Stempel 32 zugeordnet sind. Diese sind auf einem Wagen 33 mittels Kolbenzylindereinheiten 34 gelagert, wobei diese Wagen 33 mittels einer Spindel 35 und einem Antrieb 36 quer verfahrbar sind. Selbstverständlich sind sie in der gewünschten Position justierbar. Die eigentlichen Stempelköpfe 37 sind über klemmbare Kreuzgelenke 38 mit den Kolbenzylindereinheiten 34 verbunden, so daß die seitlichen Stempelköpfe 37 sowohl quer als auch in Produktionsrichtung schwenkbar sind. Man kann sich vorstellen, daß anstelle der Klemmelemente der Kreuzgelenke 38 zum Schwenken in den besagten Richtungen auch nicht dargestellte Kolbenzylindereinheiten vorgesehen sein können, was natürlich einen erheblich höheren Aufwand bedeutet, aber auch die Verstellbarkeit während der Produktion ermöglicht. Die Stirnflächen 39 der Stempelköpfe 37 sind gewölbt und zeigen in der Draufsicht geeignete geometrische Umfangskonturen 40. Der Arbeitstisch 21 stützt sich auf dem Rahmen 41 ab, auf welchem auch die Seitenbegrenzungen 42 mittels die Verstellbarkeit der Schäumbreite ermöglichenden Kolbenzylindereinheiten 43 gelagert sind. Aufgrund der vielfachen Verstellbarkeit der Stützvorrichtung in der Höhe, der Breite und in Produktionsrichtung ist es möglich, die gummielastische Platte 22 in optimaler Weise an den gewünschten Stellen nach oben durchzuwölben, wodurch in Abhängigkeit von der Gemischaufgabemenge und der Viskosität des Gemisches optimale Fließbedingungen geschaffen werden, so daß in Produktionsrichtung hinter der Verteilvorrichtung quer über die Schäumbreite gesehen nahezu gleich altes Reaktionsgemisch vorhanden ist. Der - bezogen auf die Schäumbreite - mittig angeordnete Mischer 44 ist in Produktionsrichtung verfahrbar, so daß auf diese Weise auch noch der Abstand der Gemischaufgabestelle von der Stützvorrichtung 25 vorwählbar ist. Es versteht sich, daß die Kolbenzylindereinheiten 29, 34, 43 mittels Leitungen an ein hydraulisches Steuersystem angeschlossen sind, welches wiederum von einem Schaltpult, gegebenenfalls per vorgegebenem Programm, betätigbar ist.

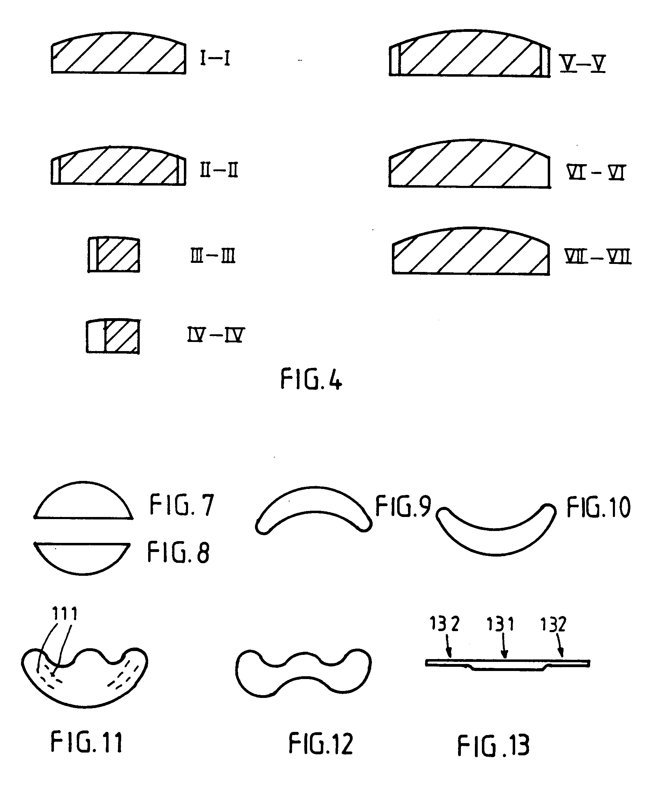

Aus den verschiedenen Schnitten in Fig. 4 ist die Stirnflächengeometrie der Stempelköpfe 37 ersichtlich.

In Fig. 5 und 6 ist eine wesentlich vereinfachte Ausführungsform dargestellt. Hier ist im Aufgabetisch 51 eine rechtwinkelige gummielastische Platte 52 eingelassen, welche auf einer abgesetzten Kante 53 mittels Schrauben 54 befestigt ist, wobei die Schrauben 54 vorgewählte, unterschiedliche Abstände aufweisen, um bevorzugte Dehnungsrichtungen zu erzielen. Auch hier erstreckt sich die gummielastische Platte 52 über 85 % der maximalen Schäumbreite. Die unterhalb der Platte 52 angeordnete Stützvorrichtung 55 besitzt einen sehr einfachen Aufbau. Ein mittlerer Stempel 56 ist auf einer Kolbenzylindereinheit 57 angeordnet, so daß er höhenverstellbar ist. Dieser Stempel 56 ist hohl und balkenartig ausgebildet und sein eigentlicher Stempelkopf besteht aus einer Abdeckplatte 58. Im Hohlraum des Stempels 56 sind zwei gegensinnig arbeitende Kolbenzylindereinheiten 59 angeordnet, welche Stempel 60 quer zur Produktionsrichtung verschieben können. Dabei kann die Abdeckplatte 58 auch so ausgebildet sein, daß ein Spalt vorhanden ist, in welchem die Stempel 60 mit rundem Querschnitt so weit hineinreichen, daß ihre obere Mantellinie mit der Oberfläche der Abdeckplatte 58 in einer Ebene liegt.

In Fig. 7 bis 12 sind besondere Grundrißkonturen der gummielastischen Platte dargestellt, aufgrund welcher im Zusammenhang mit den einwirkenden Stempeln die gewünschte Verteilung des Reaktionsgemisches über die Schäumbreite erzielt wird. Je nach Ausstoßmenge und Viskosität des Gemisches, wobei auch der Neigungswinkel des Aufgabetisches ebenso wie die Produktionsgeschwindigkeit von Einfluß sind, wird man die eine oder andere Ausführungsform wählen. Selbstverständlich sind hier nur einige von vielen möglichen Ausführungsformen aufgezeigt. Bei den Ausführungsformen gemäß Fig. 7 und 9 wird vornehmlich zur Mitte hin verteilt, während bei den Ausführungsformen gemäß Fig. 8 und 10 das Reaktionsgemisch vornehmlich zu den Seiten verteilt wird. Bei den Ausführungsformen gemäß Fig. 11 und 12 entstehen im Zusammenwirken mit den entsprechenden drei Stempeln im vornehmlich zu den Seiten verteilt wird. Bei den Ausführungsformen gemäß Fig. 11 und 12 entstehen im Zusammenwirken mit den entsprechenden drei Stempeln im Bereich zwischen den Stempeln Täler, durch welche mehr Gemisch strömt.

Aus Fig. 11 sind außerdem an der Unterseite der Platte befindliche, gestrichelt dargestellte Verstärkungsrippen 111 ersichtlich, welche unterschiedliche Verformung der Platte bewirken.

Aus Fig. 13 ist ersichtlich, daß die gummielastische Platte Zonen 131 und 132 unterschiedlicher Dicke aufweist.

## Patentansprüche

1. Anlage zum kontinuierlichen Herstellen von Polyurethan-Blockschaumstoff, speziell aus einem schnell reagierenden, frei aufschäumenden Reaktionsgemisch, insbesondere mit einer Steigzeit unter 1,5 Minuten, bestehend aus einem endlosen Transporthand (5), welches zusammen mit verstellbaren Seitenbegrenzungen (7) einen in der Breite einstellbaren Schäumtrog bildet, wobei dem Transportband (5) ein Aufgabetisch (1, 21, 51) mit einem darüber angeordneten, feststehenden Mischkopf (4) vorgeordnet ist, wobei dieser Aufgabetisch (1, 21, 51) eine der Gemischaufgabestelle (4, 44) nachgeordnete Verteilvorrichtung (8) aufweist, welche aus einer verformbaren Platte (9, 22, 52) mit darunter angeordneter, in der Höhe verstellbarer Stützvorrichtung (10, 25, 55) besteht, und wobei eine oder mehrere Abwickelstation(en) (2) lediglich für Boden- und Seitenwand-Abdeckbahnen (3) vorgesehen sind, dadurch gekennzeichnet, daß die verformbare Platte (9, 22, 52) aus einer in den Aufgabetisch (1, 21, 51) eingelassenen gummielastischen Platte (9, 22, 52) besteht und sich über mindestens 80 % der maximal vorgesehenen Auftragsbreite erstreckt und in unverformtem Zustand mit dem Aufgabetisch (1, 21, 51) eine ebene Fläche bildet; daß der umlaufende Rand dieser Platte (9, 22, 52) im Aufgabetisch (1, 21, 51) fixiert ist; daß die Stützvorrichtung (10, 25, 55) einen mittig angeordneten Stempel (31, 56) aufweist, welchem quer zur Produktionsrichtung mindestens zwei symmetrisch dazu seitlich angeordnete, verstellbare Stempel (32, 60) zugeordnet sind.

2. Anlage nach Anspruch 1, dadurch gekennzeichnet, daß die seitlichen Stempel (32, 60) quer zur Produktionsrichtung verfahrbar gelagert sind.

3. Anlage nach Anspruch 1 oder 2, dadurch gekennzeichnet, daß die seitlichen Stempel (32, 60) schwenkbar gelagert sind.

4. Anlage nach einem der Ansprüche 1 bis 3, dadurch gekennzeichnet, daß die seitlichen Stempel (32) unabhängig vom mittleren Stempel (31) höhenverstellbar gelagert sind.

5. Anlage nach einem der Ansprüche 1 bis 4, dadurch gekennzeichnet, daß alle Stempel (31, 32, 56, 60) gemeinsam höhenverstellbar gelagert sind.

6. Anlage nach einem der Ansprüche 1 bis 5, dadurch gekennzeichnet, daß die Stempel aus aufblähbaren Kammern bestehen.

7. Anlage nach einem der Ansprüche 1 bis 6, dadurch gekennzeichnet, daß die gummielastische Platte (9, 22, 52) in ihrer Ausdehnung symmetrisch zur Produktionsachse konturiert ist.

8. Anlage nach einem der Ansprüche 1 bis 7, dadurch gekennzeichnet, daß die gummielastische Platte (9, 22, 52) stellenweise unterschiedliche Dehnung aufweist.

## Claims

1. Installation for continuous production of polyurethane block foam, in particular from a fast-reacting, freely expanding reaction mixture, in particular having a rise time of less than 1.5 minutes, comprising a continuous conveyor belt (5) which together with adjustable lateral boundaries (7) forms a width-adjustable expansion trough, a feeding table (1, 21, 51) with a stationary mixing head (4) disposed above it being arranged upstream of the conveyor belt (5), said feeding table (1, 21, 51) having a distributing device (8) which is disposed downstream of the mixture feeding point (4, 44) and comprises a deformable plate (9, 22, 52) having, disposed below it, a height-adjustable support device (10, 25, 55), with one or more take-off stations (2) being provided exclusively for bottom and side wall cover bands (3), characterized in that the deformable plate (9, 22, 52) comprises a rubber-elastic plate (9, 22, 52) let into the feeding table (1, 21, 51) and extends over at least 80% of the maximum intended application width and, in its undeformed state, forms a plane surface with the feeding table (1, 21, 51); that the circumferential edge of said plate (9, 22, 52) is fixed in the feeding table (1, 21, 51); that the support device (10, 25, 55) has a centrally disposed prop (31, 56), associated with which, at right angles to the production direction and disposed laterally and symmetrically to said prop, are at least two adjustable props (32, 60).

2. Installation according to claim 1, characterized in that the lateral props (32, 60) are supported so as to be movable at right angles to the production direction.

3. Installation according to claim 1 or 2, characterized in that the lateral props (32, 60) are supported so as to be capable of swivelling.

4. Installation according to one of claims 1 to 3, characterized in that the lateral props (32) are supported so as to be height-adjustable independently of the central prop (31).

5. Installation according to one of claims 1 to 4, characterized in that all of the props (31, 32, 56, 60) are supported so as to be jointly height-adjustable.

6. Installation according to one of claims 1 to 5, characterized in that the props comprise inflatable chambers.

7. Installation according to one of claims 1 to 6, characterized in that the rubber-elastic plate (9, 22, 52), in terms of its dimensions, is contoured symmetrically relative to the production axis.

8. Installation according to one of claims 1 to 7, characterized in that the elongation of the rubber-elastic plate (9, 22, 52) varies from point to point.

## Revendications

1. Installation pour la production en continu de blocs en mousse de polyuréthane, spécialement en un mélange réactionnel qui réagit rapidement et qui mousse librement, en particulier avec un temps de montée inférieur à 1,5 minute, constituée par une bande transporteuse sans fin (5) qui forme conjointement avec des délimitations latérales mobiles (7) un bac de moussage réglable en largeur, dans laquelle une table de chargement (1, 21, 51) avec une tête de mélange fixe (4) agencée au-dessus est agencée an amont de la bande transporteuse (5), cette table de chargement (1, 21, 51) présentant un dispositif de distribution (8) agencé en aval de l'emplacement de chargement du mélange (4, 44), ce dispositif de distribution étant constitué par une plaque déformable (9, 22, 52) avec un dispositif d'appui (10, 25, 55) agencé au-dessous et réglable en hauteur, et dans laquelle on prévoit une ou plusieurs stations de déroulement (2) uniquement pour des bandes de couverture (3) pour le fond et les parois latérales, caractérisée en ce que la plaque déformable (9, 22, 52) est constituée par une plaque en caoutchouc élastique (9, 22, 52) intégrée dans la table de chargement (1, 21, 51) et s'étend sur au moins 80 % de la largeur de déposition prévue au maximum, et forme à l'état non déformé une surface plane avec la table de chargement (1, 21, 51) ; en ce que la bordure périphérique de cette plaque (9, 22, 52) est fixée dans la table de chargement (1, 21, 51) ; en ce que le dispositif d'appui (10, 25, 55) présente un poinçon (31, 56) agencé au milieu, auquel sont associés transversalement par rapport à la direction de production au moins deux poinçons mobiles (32, 60) agencés latéralement de façon symétrique par rapport à ce poinçon médian.

2. Installation selon la revendication 1, caractérisée en ce que les poinçons latéraux (32, 60) sont montés en déplacement transversal par rapport à la direction de production.

3. Installation selon l'une ou l'autre des revendications 1 et 2, caractérisée en ce que les poinçons latéraux (32, 60) sont montés en basculement.

4. Installation selon l'une quelconque des revendications 1 à 3, caractérisée en ce que les poinçons latéraux (32) sont montés de façon réglable en hauteur indépendamment du poinçon médian (31).

5. Installation selon l'une quelconque des revendications 1 à 4, caractérisée en ce que tous les poinçons latéraux (31, 32, 56, 60) sont montés conjointement réglables en hauteur.

6. Installation selon l'une quelconque des revendications 1 à 5, caractérisée en ce que les poinçons sont constitués par des chambres gonflables.

7. Installation selon l'une quelconque des revendications 1 à 6, caractérisée en ce que la plaque en caoutchouc élastique (9, 22, 52) présente, quant à son extension, un contour qui est symétrique par rapport à l'axe de production.

8. Installation selon l'une quelconque des revendications 1 à 7, caractérisée en ce que la plaque en caoutchouc élastique (9, 22, 52) présente un allongement localement différent. ,
